# EUROPEAN PATENT SPECIFICATION

(11) **EP 4 058 306 B1**
(45) Date of publication and mention of the grant of the patent: **06.12.2023**
(21) Application number: 20800562.9
(22) Date of filing: 23.10.2020
(51) Int. Cl.: B60C 23/06, B60W 40/10, B60W 40/11, B60W 40/112

(54) **METHOD AND SYSTEM FOR ESTIMATING A VEHICLE BODY MOTION DURING THE RUNNING OF A VEHICLE ALONG A ROAD SEGMENT**
VERFAHREN UND SYSTEM ZUM SCHÄTZEN EINER FAHRZEUGKÖRPERBEWEGUNG WÄHREND DES FAHRENS EINES FAHRZEUGS ENTLANG EINES STRASSENSEGMENTS
PROCÉDÉ ET SYSTÈME PERMETTANT D'ESTIMER UN MOUVEMENT DE CARROSSERIE DE VÉHICULE PENDANT LE DÉPLACEMENT D'UN VÉHICULE LE LONG D'UN SEGMENT DE ROUTE

(30) Priority: 15.11.2019 IT 201900021267
(43) Date of publication of application: 21.09.2022
(73) Proprietor: Pirelli Tyre S.P.A., 20126 Milan (IT)
(72) Inventor: SALLUSTI, Massimiliano, 20126 Milan (IT); MONTORIO, Gabriele, 20126 Milan (IT); ROCCA, Marco, 20126 Milan (IT)
(74) Representative: Lasca, Sergio
(86) International application number: PCT/EP2020/079881
(87) International publication number: WO 2021/094073

(56) References cited:
- GB-A- 2 510 434
- US-A1- 2019 168 549

## Description

### Field of the invention

The present invention relates to a method and system for estimating a relative motion of vehicle body portions with respect to each other along a road segment.

The present invention also relates to a vehicle having at least two tires fitted thereon.

### Background art

Road profile is one of the most important factors affecting vehicle performance, e.g. drive comfort, handling, fuel consumption, tire rolling resistance and tire/vehicle wear.

Dynamic knowledge about road profile is very valuable information, for example for scheduling roads and/or infrastructure management and follow up road conditions.

To this purpose, standardized road profile classification has been introduced already in 1998 by the International Standards Organization in the following publication: ISO 13473-1, Characterization of Pavement Texture by Use of Surface Profiles.

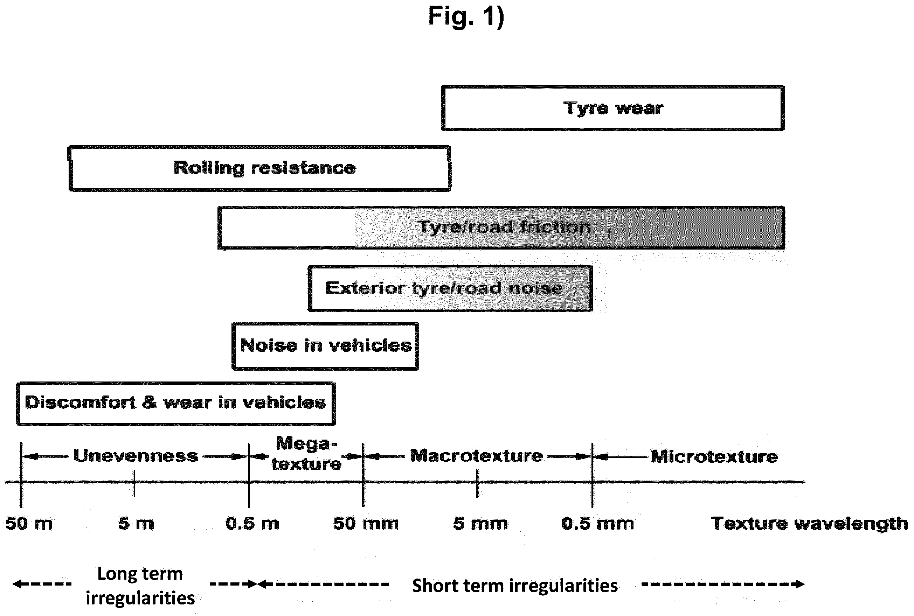

ISO 13473-1 divides the road texture/profile in four main categories depending on the texture spatial wavelength i.e. distance between periodically repeated portions of the road profile (see fig. 1):
- Microtexture - texture spatial wavelengths smaller than 0.5 mm
- Macrotexture - texture spatial wavelengths between 0.5 and 50 mm
- Megatexture - texture spatial wavelengths between 50 mm and 0.5 m
- Unevenness - texture spatial wavelengths between 0.5 and 50 m (or up to 100 m)

To further standardize roads classification, an International Road Roughness Index (IRI) has been defined by the US National Cooperative Highway Research Program in 1982.

IRI is in general a measurement of the unevenness of a road profile and it can be directly measured by using a laser profilometer or indirectly by using a calibrated vehicle as described for example in the following document retrievable at the priority date of the present application at the following website:
https://www.fhwa.dot.gov/publications/research/infrastructure/pavements/pccp/05068/002.cf m.

With reference to fig. 1, different effects of road profile texture are now briefly discussed. Micro, macro and mega textures, hereinafter collectively defined as short term irregularities, affect tire/road friction and consequently tire grip and wear and their magnitude can be estimated by measuring a wheel slip ratio.

For example US 2016/0201277 A1 and WO 2011/054363 A1 describe methods for the detection of short term road irregularities based on the measurement of wheels slip ratios by using signals representative of wheels rotational speed obtained from the ABS sensors. The aforementioned methods are generally not suitable for estimating long term irregularities (road unevenness), since the latter affects vehicle body motions more than wheels slip ratio; even in a perfectly smooth road wherein the wheels do not slip, the vehicle can exhibit unevenness induced body motion.

On the other hand, long term irregularities, i.e. road unevenness with reference to fig. 1, play a major role in determining the level of driving comfort or vehicle wear due to unevenness induced vehicle body motion.

Hereinafter road unevenness and long term road irregularities will be used as synonyms.

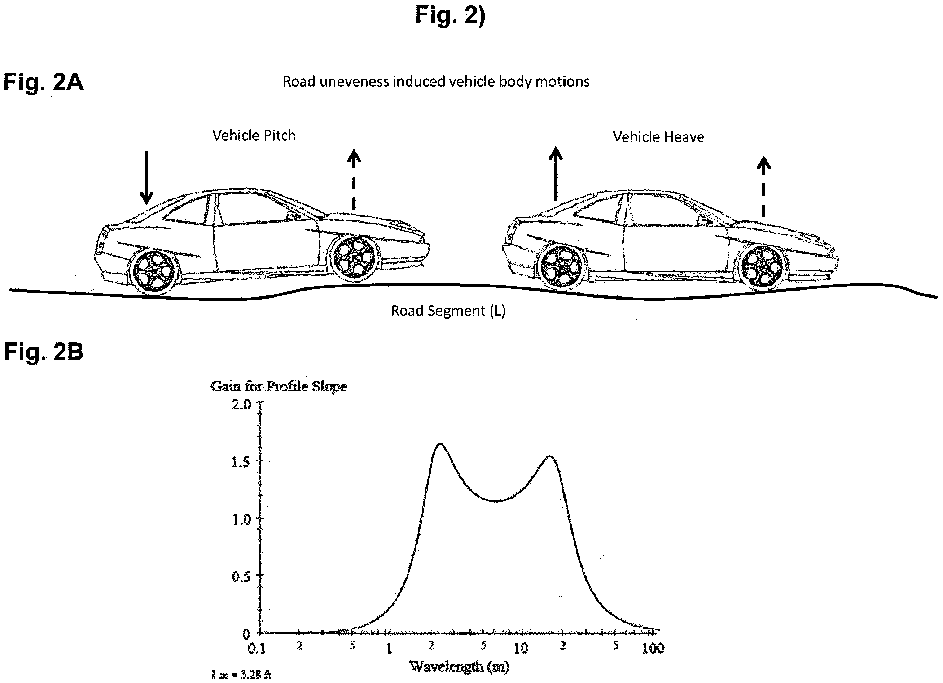

With reference to fig. 2A the effect of road unevenness on vehicle body motions is qualitatively sketched, for example vehicle pitch and heave are shown.

Reference is now made to fig. 2B wherein the effect of road unevenness on a vehicle is quantitatively shown in the framework of the so called "quarter car model" described for example in: Sayers, M.W. and Karamihas, S.M., The Little Book of Profiling: Basic Information about Measuring and Interpreting Road Profiles, University of Michigan Transportation Research Institute, Sept. 1998.

Fig. 2B features a double peak behavior of the vehicle body motion sensitivity with respect to the spatial wavelength of an uneven road profile: road unevenness having a spatial wavelength of 2 and/or 20 meters will have a stronger impact on the vehicle body motion than other road unevenness with a spatial periodicity comprised between 2 and 20 meters.

On the other hand road roughness with periodicity lower than 0.5 meter or greater than 100 meters will basically not affect the vehicle body motion.

Vehicle body motions can be generally estimated using accelerometers mounted in the vehicle itself, for example an inertial platform present in many modern cars, or accelerometers mounted on a vehicle, for example in its axles.

Moreover, the patent US7313952B2, in the name of the same applicant, describes a method for monitoring instantaneous behaviour of a tire in a rolling condition comprising the steps of acquiring and storing at least one reference curve representing an acceleration profile of at least one specified point of the tire as a function of its position during at least one portion of a revolution of the tire; continuously acquiring signals of acceleration of the at least one point; deriving from the signals of acceleration at least one cyclic curve of acceleration of the at least one point; comparing the at least one cyclic curve with the at least one reference curve; and emitting a signal depending on the comparison that indicates the instantaneous behavior of the tire.

Also, patent applications US2019168549 and GB2510434A describe, respectively, a method to detect a possibility that an abnormality has occurred in the tire and a method for monitoring the instantaneous behaviour of a tire in rolling condition; in both methods there is the use of a FFT for signal analysis in the tire/road contact area whereas the result achieved for one tire is not comparted with the result of another tire.

### Summary of the invention

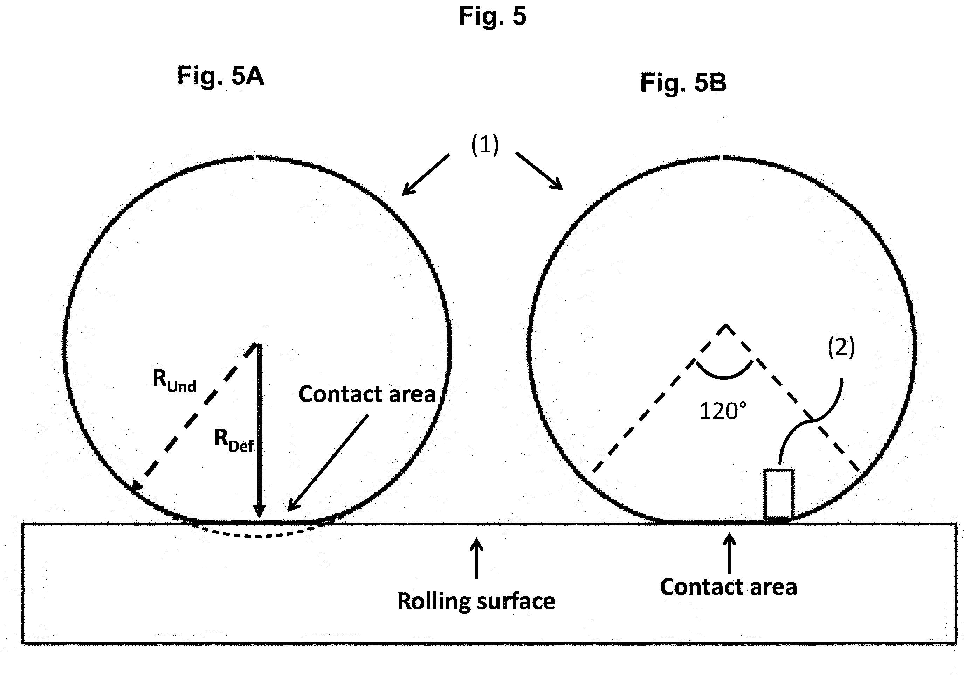

When fitted to the wheels of a vehicle, a tire is deformed by vertical force due to the weight of the vehicle body so that a contact area is formed between a tire and a rolling surface as it is shown in Fig. 5, and, during the run of a vehicle, a tire deformation varies due, also, to vehicle body motions.

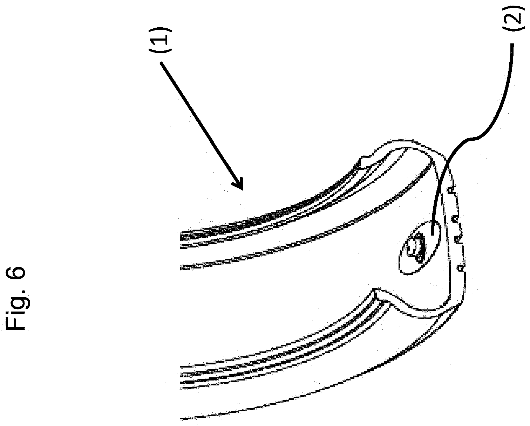

For some types of tires, especially those that require a high level of performance, monitoring units have been studied for some time which, when placed within said tires, as shown for example in Fig. 6, will have the task of detecting tire's characteristic values.

These monitoring units are particularly suitable to directly monitor tire road interactions at the tire road contact area and in particular to estimate tires deformation, for example by a measurement (and a further processing) of the radial acceleration experienced by the monitoring unit over passages into a tire contact area.

The Applicant faced the problem of estimating vehicle body motions along a road segment without any dedicated hardware, like accelerometer, or complex software, mounted on a vehicle but by monitoring tires road interaction, for example by using the aforementioned described monitoring units.

The Applicant noticed in a first place that road unevenness can cause tire deformations in very different way with respect to a concentrated bump or a sudden vehicle breaking.

During the running of a vehicle on an uneven road segment, a tire undergoes a slight deformation while transmitting mostly of the perturbation due to the road unevenness to the vehicle body, via the suspension system.

A repeated perturbation transmitted by the tires to the vehicle body will cause a low frequency motion of the vehicle body which, in turn, will result in a variation of vertical force acting on each tire, ultimately causing a variation of the deformation of the same at about the same low frequency of the vehicle body motion.

In other words, differently from a concentrated road bump, road unevenness can excite vehicle body motion in a distributed fashion over a relatively long distance, so that unevenness related motion of a vehicle body features a low frequency behavior (≈ 1 Hz).

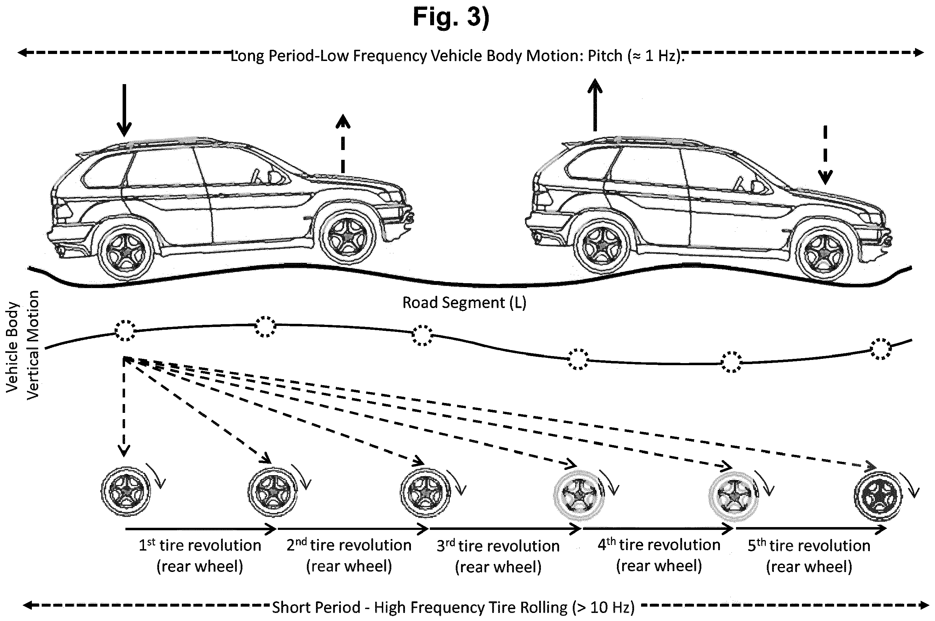

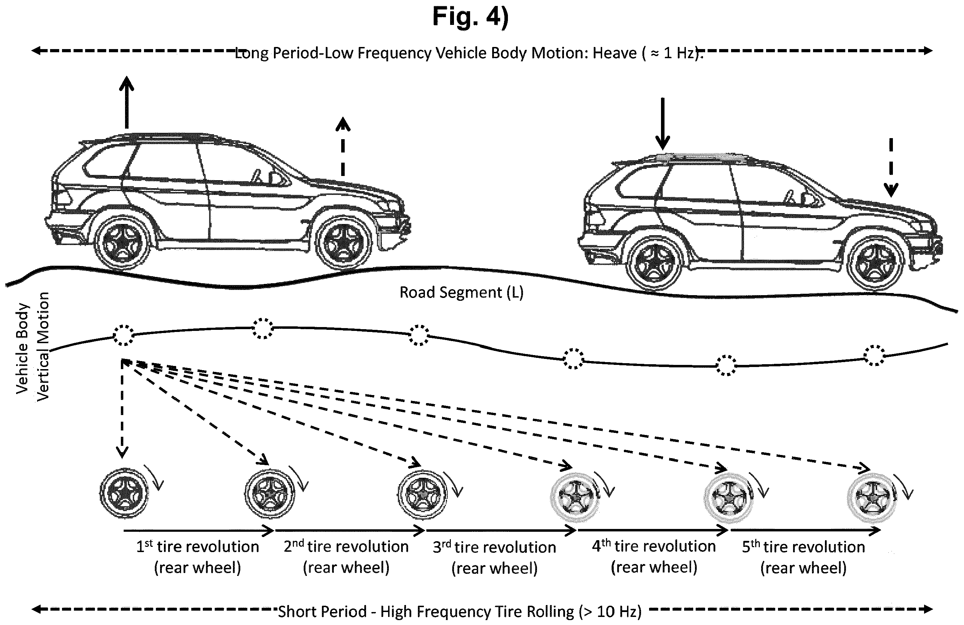

This holds in view of the high inertia of a typical vehicle body whose weight is generally several hundreds of kilograms; for example in fig. 3 and fig. 4, low frequency vehicle pitching and heaving are pictorially shown. As a general rule, the heavier the vehicle, and/or the greater the wheel base, the lower the frequency of the unevenness related vehicle body motion.

Having understood the role of the unevenness induced body motion in inducing a low frequency (≈ 1 Hz) variation of tire deformation, the Applicant focused on the relative dynamics of vehicle body motion and tire rolling and further noticed that, due to the low frequency behaviour (≈ 1 Hz) of a vehicle body motion, a tire undergoes a significant number of rotations during an oscillation period of a vehicle body, as schematically shown in fig. 3 and fig. 4 respectively for vehicle pitching and heaving.

A typical rotation frequency of a tire lays, in fact, in the 10 Hz range (at about 80 km/h), so that vehicle body motions and tire rolling feature a very different time scales, the first being relatively slow as compared to the second (1 Hz versus 10 Hz).

Driven by said observation the Applicant further understood that a tire deformation not only can take into account the variations of vertical forces acting on wheels through the suspension systems during vehicle body motions and the filtering effect of the suspension system itself, but, most importantly, that the estimation of tire deformation over multiple tire rotations can also lead to a very good sampling of the vehicle body motion due to the high frequency difference between the about 1 Hz body motion and the higher tire rotation frequency, even at relatively low vehicle speed.

In other words the Applicant understood that the time scale difference between vehicle body motions and tires rolling can be conveniently exploited to use tires monitoring (i.e. deformation estimation over multiple tire rotations) to sample vehicle body motions.

The aforementioned sampling is possible since the variations of vehicle body motions and tire deformations are temporally, and/or spatially, related, as previously discussed, and tire deformations over multiple tire rotations can be estimated at a higher rate than the 1 Hz dynamic of vehicle body motions by exploiting the dynamic of tire rolling, occurring at a rate high enough to properly resolve the 1 Hz slow dynamic of vehicle body.

Summarising the Applicant understood that by measuring, or estimating, tire deformation variations over multiple tire rotations at a rate of the quickly varying (≈ 10 Hz) tire rolling, for example every passage of a monitoring unit in correspondence of a tire contact area, the relatively slow (vertical) motion (≈ 1 Hz) of a vehicle body portion associable to a tire (i.e. the vehicle body portion closer to a tire) can be sampled.

This holds since the same curve describing a variation of the deformation of a tire over multiple tire rotations (which is the physical variable actually measured or estimated) will also be descriptive of the motion of a vehicle body portion associated to a tire along a road segment.

Hereinafter by vehicle body portion associable (or associated) to a tire it is meant the particular portion of a vehicle closer to a particular tire than to the remaining ones, in particular the vehicle body portion vertically on top a particular tire.

However, the Applicant understood that knowledge of the deformation of a single tire of a vehicle is not enough to discriminate which kind of unevenness induced body motion a vehicle's body is undergoing (or underwent): for example a front left tire of a car could be deformed either in the case of vehicle breaking or in the case of unevenness induced body pitching or heaving.

On the other hand, when respective deformations of at least two tires of a vehicle are estimated over multiple tire rotations, a respective deformation curve can be obtained for each tire.

The Applicant then understood that once respective deformations curves of at least two tires over multiple tire rotations are obtained, by comparing their relative trends it is possible to estimate a relative motion of vehicle body portions with respect to each other along a road segment; for example it can be understood whether a vehicle is pitching and/or heaving due to road unevenness.

Pitching, for example, is a vehicle body motion wherein front and rear portions of a vehicle move relative to each other in an antiphase behaviour; the opposite holds for vehicle heave as shown in fig. 3 and fig. 4. Analogous considerations hold for vehicle rolling.

In the case where at least two tires are fitted to different axles of a vehicle, for example the front and rear axles of a car as it is shown in Fig. 3 and Fig. 4, vehicle pitching or heaving can be identified, while when at least two tires are fitted to the same axle of a vehicle, for example the front one, vehicle rolling can be identified.

When at least three tires are monitored, and a respective deformation is estimated over multiple tire rotations, combinations of vehicle pitching, heaving and rolling can be identified in the case wherein two of them are fitted to the same axle and the other one to a different axle of a vehicle. Analogous considerations hold when four (or more) tires are considered.

In this way, the measurement of tires deformations variations over multiple tire rotations can be used to directly estimate vehicle body motions without the need of a detailed knowledge of the vehicle suspension system and without the need of dedicated hardware mounted on the vehicle body and/or axles.

Exemplarily, a value of a tire deformation over a tire rotation (or passage) can be obtained by measuring the radial acceleration (or another quantity descriptive of a deformation of a tire) at least during the passage of a monitoring unit associated to a tire in correspondence of the contact area during a tire rotation and process the measured quantity, so as to obtain a value of a tire deformation undergone by a tire in a rotation (or passage).

By a passage of a monitoring unit associated to a tire in correspondence of a tire contact area it is hereinafter meant the spanning by a monitoring unit during tire rotation of an angle (e.g of about 120 degrees) comprising (but not necessarily centered around) a tire contact area as shown in Fig. 5B.

The deformation estimation discussed above can be repeated over multiple tire rotations (or passages), so as to obtain a plurality of values of a tire deformation which can be further assembled in a curve representative of a deformation of a tire over multiple rotations along said road segment and, in view of the previous discussion, the same curve will also be descriptive of the motion of a vehicle body portion associated to such tire along a road segment.

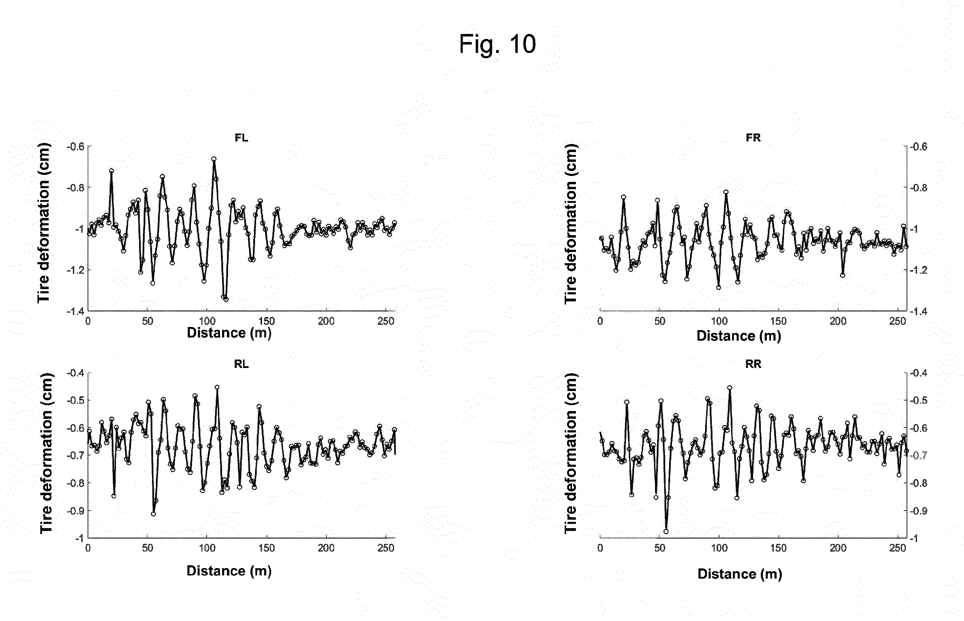

For example, Fig 10 shows the respective deformations curves of the four tires of a vehicle over multiple tire rotations along a 260 meters long road segment obtained according to the previously discussed steps (the solid circles in Fig. 10 represent tire rotations, or passages).

It is worthy to underline here that for the purpose of the present invention, a tire deformation variation over multiple tire rotations is of interest, and not the deformation variation within a single rotation of a tire.

It is also worthy to further underline here that, to the purpose of the present invention, it is not necessary to estimate the deformation of a tire every rotation of a tire, but, depending on the vehicle speed, a deformation estimation every other tire rotation, or at some other slower rate, could be enough: the higher vehicle speed, the higher the tire rotation, and the lower the need of estimating the tire deformation every tire rotation in order to properly take into account the relatively slowly varying (≈ 1 Hz) vehicle body motions.

For example at a speed of 80 km/h, for a typical tire circumferential length of about 2 meters, a tire rotation frequency is about 10 Hz so that, generally, the tire deformation can be estimated every tire rotation in order to properly take into account the ≈ 1 Hz vehicle body motion; when the vehicle speed is increased, tire rotation frequency increases accordingly so that a deformation estimation can be skipped in some rotations (or even every other tire rotation) without hindering the possibility of properly take into account the ≈ 1 Hz vehicle body motion.

In view of the above it is here underlined that the estimated motions of a vehicle by monitoring tire road interaction (i.e. by estimating the deformation over multiple tire rotations) can be advantageously further connected to a road unevenness that ultimately generated them; for example the knowledge of unevenness induced vehicle body motion, could be used for estimating an unevenness parameter of a road profile.

In a first aspect, the invention concerns a method for estimating a relative motion of vehicle body portions with respect to each other along a road segment having a length (L), wherein said length (L) corresponds at least to a plurality of tire rotations.

The method comprises associating a respective monitoring unit to at least two tires of a vehicle, said monitoring units comprising at least one respective sensing element adapted to measure at least one quantity descriptive of a respective deformation of said tires.

The method further comprises fitting said at least two tires to a respective wheel of said vehicle and operating said vehicle so as to cause rotation of said at least two tires on a rolling surface along said road segment wherein, due to said fitting and operating, said at least two tires are deformed so as to form a respective contact area between each of said at least two tires and said rolling surface.

The method further comprises, for each of said at least two tires, measuring said quantity, descriptive of a respective deformation of said tires, at least during respective passages of said respective monitoring units in correspondence of said respective contact areas.

The method further comprises, for each of said respective passages, processing the measured quantity so as to obtain a value of a respective tire deformation undergone by each of said at least two tires in each of said respective passages, and to obtain, for each of said at least two tires, a respective plurality of values of said respective tire deformation over multiple tire rotations.

The method further comprises assembling said respective pluralities of values of said respective tire deformations so as to obtain, for each of said at least two tires, a respective curve representative of a motion of a deformation of said tires over multiple rotations of said tires along said road segment.

The method further comprises comparing relative trends of said at least two curves so as to identify the relative motion of said respective vehicle body portions with respect to each other along said road segment.

In a second aspect the invention concerns a system for estimating a relative motion of vehicle body portions with respect to each other.

The system comprises at least two monitoring units adapted to be respectively associated with at least two tires of said vehicle. The monitoring units respectively comprise at least one sensing element adapted to measure at least one quantity descriptive of a deformation of the respective associated tire, wherein, when said at least two tires are fitted to respective wheels of a vehicle and said vehicle is operated so as to cause rotation of said tires on a rolling surface, due to said fitting and operating, said tires are deformed so as to form a respective contact area between said at least two tires and said rolling surface.

The system further comprises at least one processing unit comprising software modules being adapted to estimate a relative motion of vehicle body portions with respect to each other along a road segment.

The software modules are adapted to, for each of said at least two tires, measure said quantity at least during respective passages of said respective monitoring units in correspondence of said respective contact areas.

The software modules are also adapted to, for each of said respective passages, process the measured quantity so as to obtain a value of a respective tire deformation undergone by each of said at least two tires in each of said respective passages, and to obtain, for each of said at least two tires, a respective plurality of values of said respective tire deformation over multiple tire rotations.

The software modules are also adapted to assemble said respective pluralities of values of said respective tire deformations so as to obtain, for each of said at least two tires, a respective curve representative of a deformation of said tires over multiple rotations of said tires along said road segment.

The software modules are also adapted to compare relative trends of said at least two curves so as to identify said relative motion of said vehicle body portions with respect to each other along said road segment.

At least some of the above mentioned software modules can be implemented (e.g. as firmware modules) in a processing unit comprised within the monitoring unit and/or in a controlling unit installed or to be installed externally of the tire, e.g. on the vehicle and/or on a personal device of the vehicle driver (e.g. a smartphone or other portable device) or in a cloud server.

In a third aspect the invention concerns a vehicle having at least two tires fitted thereon, comprising a system for estimating a relative motion of vehicle body portions with respect to each other as described above.

In one or more of the above aspects, the present invention may comprise one or more of the following preferred features.

Preferably said measuring of said quantity is carried out at a measuring frequency higher than or equal to 0.5 KHz, more preferably higher than or equal to 1 KHz, even more preferably higher than or equal to 5 KHz.

In this way an optimal trade-off can be achieved among several constraints: duration of the measurement, power consumption during measuring and power consumption during data transmission from the monitoring unit to the control unit and vice versa.

Said measuring frequency can be selected depending on the hardware and/or software available and the actual control on the frequency settings allowed by the said available hardware and/or software.

Preferably said at least two tires are fitted to different axles of said vehicle.

In this way it is possible to identify whether said relative motion of vehicle body portions with respect to each other is due to heaving or pitching of said vehicle or a combination thereof.

Preferably said at least two tires are fitted to the wheels belonging to the same side of a vehicle.

Alternatively or in combination, said at least two tires are fitted to the same axle of said vehicle.

In this way it is possible to identify whether said relative motion of vehicle body portions with respect to each other is due to rolling of said vehicle.

When a combination of vehicle heaving, pitching or rolling is of interest, at least three monitoring units as described above are associated to respective tires, one pair of tires being fitted to different axles of said vehicle, another pair of tires being fitted to the same axle of said vehicle.

The comparison of relative trends of the at least two curves describing the respective trends of the motion of the vehicle body portions can be carried out either directly or, preferably, in the spatial frequency domain by using a Fourier analysis.

By performing a Fourier analysis of the at least two deformation curves over multiple tire rotations, the contribution of each spatial frequency to a motion of vehicle body portions associated to each tire can be precisely identified.

A spatial frequency is generally defined as the inverse of a spatial wavelength which in turn is the distance between periodically repeated portions of the road profile.

A spatial frequency has the dimension of an inverse of a length, generally it is expressed as 1/meters as in this description and related figures.

For example, in one embodiment, a relative motion of vehicle body portions with respect to each other along a road segment can be estimated by taking into account the contributions of the spatial frequencies identified in Fig. 2B as the ones mostly contributing to unevenness induced body motion, i.e. the range of spatial frequencies corresponding to a spatial wavelength comprised between about 0.5 meters and about 50 meters (or even up to 100 meters). Other set of spatial frequencies can be chosen on a case by case basis, depending for example by the vehicle in use.

In preferred embodiments of the method of the invention, the comparison of relative trends of said at least two curves further comprises:
- calculating a respective Fourier transform of said at least two curves, so as to obtain at least a first and a second Fourier transforms,
- identifying said relative motion based on a processing of said first and second Fourier transforms.

More particularly, the comparison of relative trends of said at least two curves further comprises:
- multiplying said first Fourier transform to the complex conjugate of said second Fourier transform so as to obtain a Fourier product curve,
- extracting a phase information related to at least one spatial wavelength from said Fourier product curve,
- identifying said relative motion based on a processing of said phase information related to said at least one spatial wavelength.

In preferred embodiments of the system of the invention, the software modules adapted to compare relative trends of said at least two curves comprise software modules adapted to:
- calculate a respective Fourier transform of said at least two curves, so as to obtain at least a first and a second Fourier transforms,
- identify said relative motion based on a processing of said first and a second Fourier transforms.

More particularly, said software modules are adapted to:
- multiply said first Fourier transform to the complex conjugate of said second Fourier transform so as to obtain a Fourier product curve,
- extract a phase information related to at least one spatial wavelength from said Fourier product curve,
- identify said relative motion based on a processing of said phase information related to said at least one spatial wavelength.

In this way the contribution of a road spatial wavelength to the motion of said respective vehicle body portion can be qualitatively identified, i.e. it is possible to discriminate whether said road spatial frequency contributed to "heaving" or "pitching" or "rolling" of said vehicle or a combination thereof.

In an embodiment wherein said at least two tires are fitted to different axles of a vehicle, preferably said relative motion is identified as vehicle first motion when said phase information is descriptive of an in phase behaviour of said motions of said vehicle body portions at said road spatial wavelength, or said relative motion is identified as vehicle second motion when said phase information is descriptive of antiphase behaviour of said motions of said vehicle body portions at said road spatial wavelength.

Preferably said vehicle first motion is heaving of the vehicle. Preferably said vehicle second motion is pitching of the vehicle.

In an embodiment wherein said at least two tires are fitted to the same axle of a vehicle, preferably said relative motion is identified as third vehicle motion when said phase information is descriptive of an antiphase behaviour of said motions of said vehicle body portions at said road spatial wavelength. Preferably said vehicle third motion is rolling of the vehicle.

Preferably the method further comprises calculating, and/or the software modules of the system are adapted to calculate, a magnitude of said relative motion associable to a road spatial wavelength based on a processing of an absolute value of said Fourier product curve at said road spatial wavelength.

In this way it is possible to further discriminate not only which spatial frequencies associated to a certain road segment contributed respectively to vehicle pitching, heaving or rolling, but also the magnitude of their respective contribution, thus allowing a quantitative analysis of the vehicle body motion. This can also be used to estimate an unevenness parameter associable to the road segment.

Such quantitative analysis of the vehicle body motion can be transmitted to a vehicle control system to improve its calibration and/or can be transmitted to a remote processing unit external to said vehicle, such as for example a cloud server.

The Applicant has further noticed that the present invention leads to a more precise outcome if it is carried out in a way that during the measurement the kinematic and/or dynamic conditions acting on a tire do not undergo a substantial variation. In other words, in preferred embodiments the measurement is performed in static or quasi static running conditions.

In more detail, in preferred embodiments, the method further comprises starting, and/or the software modules of the system are adapted to start, the measurement of said quantity when at least one of the following access conditions is met:
- a speed of said vehicle (100) is comprised within a predetermined speed range, preferably within about 40 km/h and about 100 km/h, more preferably within about 60 km/h and about 80 km/h;
- an absolute value of longitudinal acceleration of said vehicle (100) is lower than a predetermined amount, preferably below about 1 m/s².

In more preferred embodiments, a further access condition to be met may be provided, by which an absolute value of lateral acceleration (i.e. the acceleration in a direction perpendicular to the direction of motion of the vehicle) of said vehicle is lower than a predetermined amount, preferably below about 0.5 m/s².

In further preferred embodiments, the present invention further comprises stopping the measurement of the quantity descriptive of tire deformations for example to track that the kinematic or dynamic conditions are changing, or have changed, to an extent not compatible with the accuracy requested by the vehicle control system.

For example, in preferred embodiments, the method further comprises stopping, and/or the software modules of the system are adapted to stop, the measurement when at least one of the following stopping conditions is met:
- an absolute value of longitudinal acceleration of said vehicle exceeds a predetermined acceleration threshold, preferably about 1 m/s²;
- a speed of said vehicle is outside a predetermined speed range, preferably below about 40 km/h or preferably above about 100 km/h.

A further stopping condition to be met may be provided, by which an absolute value of lateral acceleration of said vehicle is higher than a predetermined amount, preferably the absolute value of lateral acceleration of said vehicle is higher than about 0.5 m/s².

In further embodiments, one or more of the above stopping conditions may be used to discard at least one subset of performed measurements.

In preferred embodiments, the monitoring unit is secured to a crown portion of the respective tire, more preferably to an inner surface of the tire.

In preferred embodiments, the monitoring unit comprises at least one sensing element adapted to measure at least a radial and/or tangential acceleration of said crown portion during rotation of said tire.

Securing said monitoring unit to a crown portion of a tire, close to, or even embedded in, the tire tread, is advantageous since it is easier to measure a quantity descriptive of tire deformations.

The Applicant has further noticed that the present invention leads to a more precise outcome if preferably at least a second monitoring unit is associated to a tire.

### Brief description of the drawings

Additional features and advantages of the invention will be better apparent from the following description of some preferred embodiments thereof, made hereinafter for exemplifying and non limiting purposes, to be read with reference to the attached figures, in which:
- Fig. 1 shows a road texture profile classification dividing the road texture/profile in short term and long term irregularities.
- Fig. 2A qualitatively shows the respective movements of rear (solid line) and front (dashed line) vehicle body portions during vehicle pitching or heaving, while Fig. 2B shows the effect of road unevenness on a vehicle in the framework of the quarter car model.
- Fig. 3 shows the relative dynamic of the relatively fast tire rolling (≈ 10 Hz) and the relatively slow vehicle body motion (≈ 1 Hz) in the case of vehicle pitching.
- Fig. 4 shows the relative dynamic of the relatively fast tire rolling (≈ 10 Hz) and the relatively slow vehicle body motion (≈ 1 Hz) in the case of vehicle heaving.
- Fig. 5A shows a deformed tire wherein R_{Und} (dashed) is the tire radius in the tire portion which is not deformed while R_{Def} (solid) is the tire radius in the contact area, a portion where the tire is deformed on a rolling surface. Fig. 5B shows a deformed tire, and the passage of said monitoring unit associated to it in correspondence of a tire contact area. A monitoring unit associated to a tire is considered to be in correspondence of a tire contact area when is within a 120° angle comprising (but not necessarily centered around) a tire contact area.
- Fig. 6 shows a monitoring unit fitted into a tire.
- Fig. 7 shows a scheme of a monitoring unit according to an embodiment of the invention.
- Fig. 8 shows a scheme of a vehicle comprising a tire monitoring system and a vehicle control system according to an embodiment of the invention.
- Fig 9 shows a scheme of a controlling unit according to an embodiment of the invention.
- Fig 10 shows the respective deformations curves of the four tires of a vehicle over multiple tire rotations along a 260 meters long road segment.
- Fig 11 shows the absolute values and phases of the Fourier transforms of the deformation curves of Fig. 10.
- Fig 12 shows the Fourier product curves of tire pairs according to the embodiment of Fig. 10 and Fig. 11.
- Fig 13 shows the respective deformations curves of the four tires of a vehicle over multiple tire rotations along a 20 meters long road segment.
- Fig 14 shows the absolute values and phases of the Fourier transforms of the deformation curves of Fig. 13.
- Fig 15 shows the Fourier product curves of tire pairs according to the embodiment of Fig. 12 and Fig. 13.

### Detailed description of embodiments of the invention

Reference is made to fig. 6 showing a portion of a tire (1) comprising a monitoring unit (2) adapted to measure a quantity descriptive of the deformation of a tire at a measuring frequency.

Said monitoring unit (2) is secured to a crown portion of said tire (1), preferably substantially in correspondence of the equatorial plane of the tire. In particular, the monitoring unit (2) may be glued or connected via an adhesive tape to the inner liner of the tire.

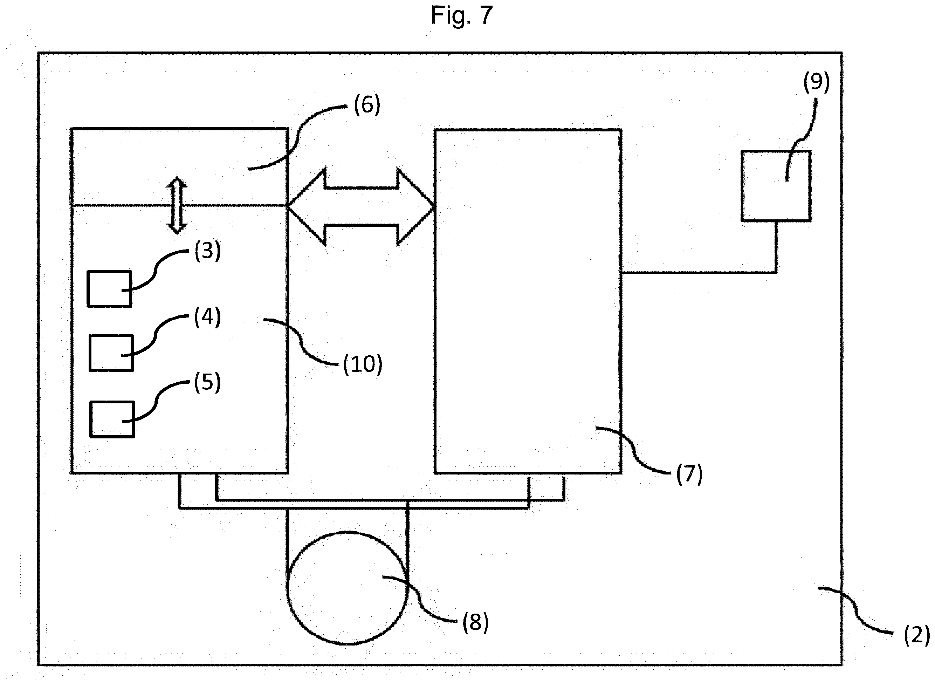

With reference to fig.7, the monitoring unit (2) comprises a sensing section (10), a battery (8), a processing unit (or CPU) (6) associated with a memory, a transceiver (7), an antenna (9).

The monitoring unit (2) can be of the type currently available on the market generally comprising temperature and/or pressure sensors and an accelerometer, or other inertial sensors, used for detecting the tire deformation, i.e., the output signal of the acceleration sensor (or other inertial device) is analysed, or processed, to derive information about tire deformations.

Particularly, the sensing section (10) of the monitoring unit (2) comprises an accelerometer (3), particularly a radial accelerometer, oriented within the monitoring unit (2) so as to have an axis substantially orthogonal to the inner surface of the tire. The accelerometer (3) is configured to output an acceleration measurement descriptive of deformations in radial direction which said tire (1) undergoes during rolling. Other sensing elements adapted for measuring physical quantities descriptive of tire deformations could be used, such as tangential accelerometers, lateral accelerometers, strain gauges, etc.

The sensing section (10) of said monitoring unit (2) further comprises a pressure sensor (4) configured to output a measurement of the pressure internal to said tire (1). The sensing section (10) of the monitoring unit (2) further comprises a temperature sensor (5) configured to output a measurement of the temperature of said tire (1). The accelerometer (3) is configured to operate at a measuring frequency and preferably said measuring frequency is higher than 0.5 KHz, more preferably higher than or equal to 1 KHz, even more preferably higher than or equal to 5 KHz.

According to an embodiment of the present invention, the measurement, at a measuring frequency, of the acceleration descriptive of deformations in radial direction which said tire (1) undergoes during rolling outputted by the accelerometer (3) is provided to the central processing unit, CPU, (6).

The central processing unit, CPU, (6) is configured, via suitable software/firmware modules, to receive, from the sensing section (10), data related to the measurements performed by the radial accelerometer (3) and the temperature and pressure sensors (4,5).

The CPU (6) is also configured, via suitable software/firmware modules, to process the data received from said sensors and accelerometer (3,4,5) in order to obtain, from said data, tire related parameters, in particular the deformation undergone by a tire associated with a certain monitoring unit over a tire rotation or multiple rotations of said tire.

Alternatively, the CPU (6) can be configured, via suitable software/firmware modules, to process said data up to a certain extent, i.e. to perform only part of the processing, and then to send the processing results to an external controlling unit (11), via the transceiver (7) and the antenna (9), to complete the processing up to obtain said tire related parameters, in particular to obtain the deformation undergone by a tire associated with a certain monitoring unit over a tire rotation or multiple rotations of said tire.

Ultimately the choice of whether distributing the processing between the monitoring units (2) and the external controlling unit (11) for the tire related parameter estimation is a tradeoff between several constraints to be balanced, such as: hardware complexity, battery consumption, cost, processing power available to the CPU of the monitoring units, etc.

The CPU (6) may be also configured, via suitable software/firmware modules, to receive access and/or stopping conditions from the external controlling unit. The access conditions may be used by the CPU (6) as a trigger to command the sensing section (10) to start the measurements needed for the estimation of the tire related parameters, and/or to start the processing needed for the estimation of the tire related parameters.

The stopping conditions may be used by the CPU (6) as a trigger to stop or suspend the measurements performed by the sensing section (10), and/or to stop or suspend the processing needed for the estimation of the tire related parameters.

The transceiver section (7) is configured for bidirectional communication via the RF antenna (9) with an external controlling unit (11) specifically configured for communication with the monitoring units (2) comprised within the tires of a vehicle. Alternatively, the transceiver section (7) can directly communicate, via the RF antenna (9), with a vehicle control system, such as the vehicle board computer. In preferred embodiments, the transceiver (7) comprises a Bluetooth Low Energy (BLE) module.

The battery (8) directly or indirectly feeds electrical power to the various components of the monitoring unit (2). In preferred embodiments, it can be a battery rechargeable with power scavenged from mechanical energy caused by tire rotation.

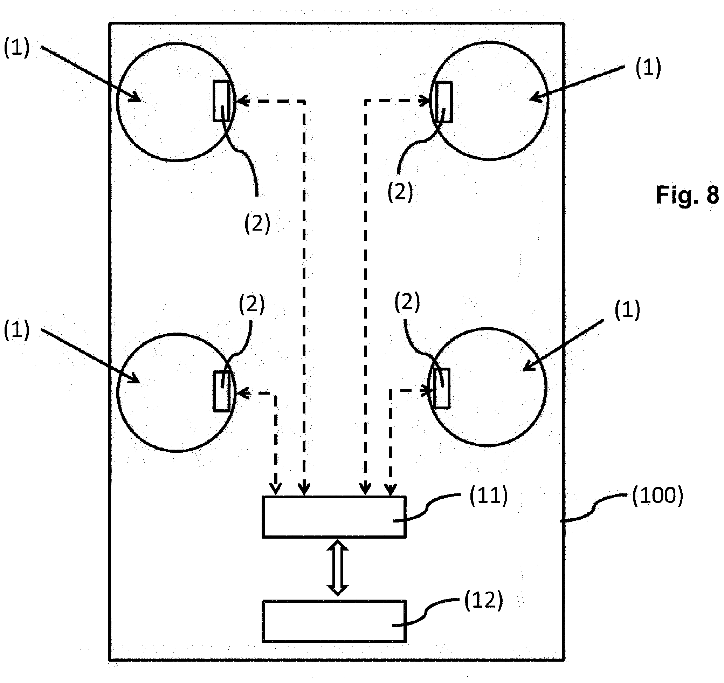

Fig.8 schematically shows an embodiment of a system for estimating a relative motion of vehicle body portions with respect to each other along a road segment.

The system is implemented in a vehicle (100) fitted with four tires (1), each of which comprising a respective monitoring unit (2). The vehicle (100) may be for example a car. However, the present invention also applies to other kinds of vehicles, such as two or three wheeler scoters, motorbikes, tractors, buses, trucks or light trucks, i.e. to vehicles with two, three, four, six or more wheels distributed on two or more axles. The vehicle (100) can be driven by electrical power, or relying on thermal propulsion or it can be a hybrid vehicle.

The monitoring units (2) are in communication with a controlling unit (11).

In one embodiment the controlling unit (11) is in communication with a vehicle control system (12) configured for adjusting vehicle control parameters based on the relative motion of vehicle body portions with respect to each other along a road segment estimated by the monitoring units (2) and/or by the controlling unit (11). The vehicle control system (12) can be the control board computer of the vehicle (100), and/or a subsystem configured for adjusting at least one of said vehicle control parameters (e.g. a suspension control subsystem, a brake control subsystem, a steering control subsystem, a module configured for estimating a residual mileage of the vehicle).

In another embodiment data related to: the results of the measuring of said quantity representative of the deformations of said tires, and/or said plurality of values of said tire deformations and/or said respective curve representative of a motion of said respective vehicle body portions over multiple rotations of said tire along said road segment, are transmitted to a remote processing unit external to said vehicle as for example a cloud server.

Typically, the communication between the monitoring units (2) and the controlling unit (11) is a wireless communication (e.g. Bluetooth communication). The communication between the controlling unit (11) and the vehicle control system (12) can be wireless and/or wired (e.g. on a CAN BUS). In other preferred embodiments, the controlling unit (11) can be hardware of software module implemented in the vehicle control system (12).

The controlling unit (11) is external with respect to the tires (1) wherein the monitoring (2) units are secured. Said controlling unit (11) can be placed anywhere in the vehicle which can be reached by the wireless (e.g. Bluetooth) signal transmitted by the monitoring units (2).

For example, the external controlling unit (11) can be a box integrated in the vehicle. In another embodiment, the external controlling unit (11) can be a mobile personal device of the vehicle driver (e.g. a smartphone or a tablet), provided with suitable software applications/modules configured at least for communication with the monitoring units (2), as well as for processing data received from the monitoring units (2).

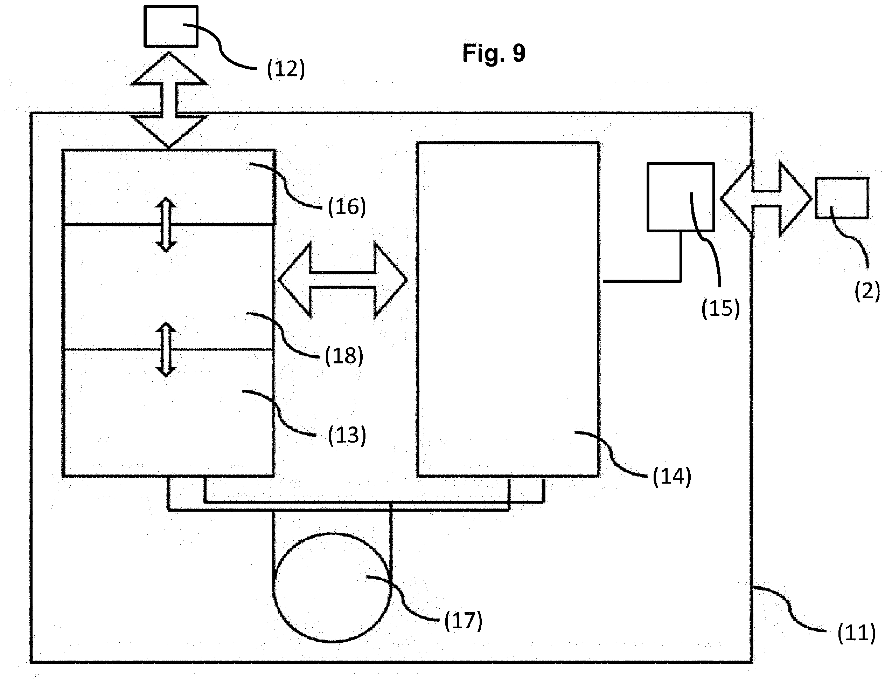

Fig.9 schematically shows an embodiment of a controlling unit (11) suitable for a system for estimating a relative motion of vehicle body portions with respect to each other along a road segment of Fig.8.

The controlling unit (11) comprises a GPS unit (13), a transceiver section (14), a RF antenna (15), an interface (16) to the vehicle control system (12), a battery (17), a processing unit (18) associating with a memory.

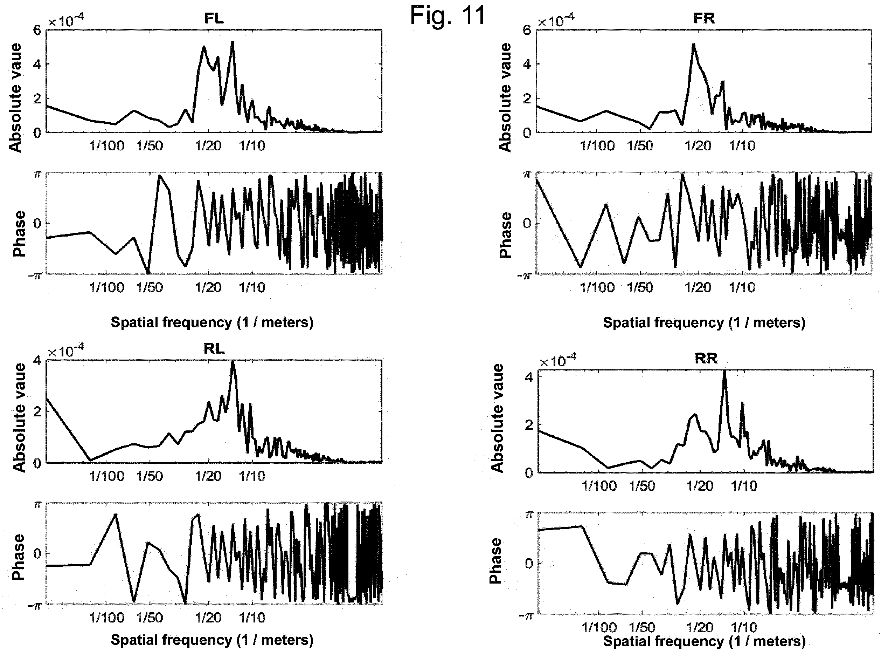

In the preferred embodiment shown in fig.11, the controlling unit (11) comprises a GPS unit (13). Alternatively, the controlling unit (11) may use data provided by an external GPS unit, for example a GPS unit on the vehicle or on a mobile personal device of the vehicle driver, such as a smartphone or a tablet.

In a preferred embodiment, said GPS unit (11) (either comprised within said controlling unit (11) or not) it is used to track the position of said road segment having a length (L) so as said road segment can be associated with a geographical map.

The transceiver section (14) of the controlling unit (11) is configured for bidirectional communication via a RF antenna (15) with the monitoring units (2). In preferred embodiments, the transceiver section (14) comprises a Bluetooth Low Energy (BLE) module.

The interface (16) can be a CAN BUS interface adapted for bidirectional communication with the vehicle control system (12).

The battery (17) directly or indirectly feeds electrical power to the various components of the controlling unit (11). In other embodiments, the controlling unit (11) can be powered by the vehicle battery, via the interface (16).

The processing unit, CPU, (18) of the controlling unit (11) is configured, via suitable software/firmware modules, to receive data from the monitoring units (2) comprised within the tires. Such data may comprise tire parameters estimated by the monitoring units (2), for example a tire deformation, or measurements performed by the monitoring units (2), or results of partial processing performed on said measurements by the monitoring units (2). For example the monitoring unit (2) can transmit to the controlling unit (11) data regarding the results of the measuring of said quantity representative of the deformations of said tires, and/or said plurality of values of said tire deformations and/or said respective curve representative of a motion of said respective vehicle body portions over multiple rotations of said tire along said road segment.

The CPU (18) is also configured, via suitable software/firmware modules, to process such data in order to estimate the a relative motion of vehicle body portions with respect to each other or to communicate said estimated relative motion already provided by the monitoring unit (2) to the vehicle control system (12).

The CPU (18) may be also configured, via suitable software/firmware modules to monitor access and/or stopping conditions to be applied for triggering starting and/or stopping/suspending the estimation of the tire related parameter(s), like the tire deformation, and/or possibly discarding those measurements performed during acquisitions occurred within time intervals in which those access conditions were not met, or measurements not respecting predetermined quality standards.

Ultimately the choice of whether distributing the processing between the monitoring units (2) and the external controlling unit (11) for said at least two tires deformations estimation (and obtaining of the related deformation curves over multiple tire rotations) is a tradeoff between several constraints to be balanced, such as: hardware complexity, battery consumption, cost, processing power available to the CPU of the monitoring units, etc.

In the preferred embodiment shown in Fig.9 and, a relative motion of vehicle body portions with respect to each other estimated by the CPU of the monitoring units (2) and/or by the CPU of the controlling unit (11) is/are eventually made available to the vehicle control system (12) via the interface (16).

In an exemplary operation mode, each of said at least two tires (1) fitted to a wheel of the vehicle (100) is caused to rotate on a rolling surface.

As a consequence of the fitting, the tire is deformed so as to form a contact area between the tire (1) and the rolling surface. Each monitoring unit (2) comprised within a tire (1) is preferably paired with said tire, e.g. by storing identifying information of the tire (e.g. tire identifier, tire size, tire model, tire radius etc.) within the memory associated with the CPU (6) of the respective monitoring unit (2).

Pressure and temperature measurements can be optionally performed by the monitoring unit (2) comprised within the tire (1) at discrete time intervals, for example every 30 seconds or upon request of said controlling unit (11) at any time during tire rolling. The start of pressure and temperature measurement can be triggered based on a signal sent by the accelerometer (3) when the tire starts to rotate, or upon request from the external controlling unit (11) or the vehicle control system (12).

The controlling unit (11) monitors the vehicle status based on GPS data and/or based on data read from the CAN BUS.

In one preferred embodiment when the speed of the vehicle (100) is between 40 km/h and 100 km/h (or more preferably within 60 km/h and 80 km/h) and/or when the absolute value of the longitudinal acceleration is lower than 1 m/s², the controlling unit (11) determines that the access conditions are met and communicates to each of the monitoring units (2) to start the measurement of the selected physical quantity representative of the tire deformation, e.g. the radial acceleration, in order to start the estimation of at least one tire related parameter. A further access condition may be based on the check that the absolute value lateral acceleration of the vehicle is lower than 0.3 m/s².

When the measurement of the quantity representative of a tire deformation is started, the radial accelerations (or another quantity representative of the deformation of a tire) of each of said at least two tires are measured at a measuring frequency at least during respective passages (or rotations) of said respective monitoring units in correspondence of said respective contact areas over multiple tire rotations along said road segment.

For example, a passage of a monitoring unit associated to a tire in correspondence of a tire contact area may correspond to the spanning, by the monitoring unit during tire rotation, of an angle (e.g. of about 120) degrees comprising (but not necessarily centered around) a tire contact area as shown in Fig. 5B.

In another embodiment, the measuring frequency can be changed in response to variation of the rotation frequency of said tire (1), so as to maintain a proper accuracy of the measurements of said quantity. The updated measuring frequency value can be communicated by said external controlling unit (11) to each of said monitoring units (2) of said at least two tires or, in another embodiment, an updated frequency can be calculated by each of said monitoring units (2).

In both the aforementioned embodiments, said measuring frequency is higher than or equal to 0.5 KHz, preferably higher than or equal to 1 KHz, even more preferably higher than or equal to 5 KHz.

By measuring at least during passages in the respective contact areas, an optimal trade-off can be achieved among several constraints: duration of the measurement, power consumption during measuring and power consumption during data transmission from the monitoring unit to the control unit and vice versa.

As previously discussed, the measuring of the radial acceleration (or of another quantity representative of the deformation of a tire) is carried out for each of said at least two tires over multiple tire rotations along a road segment having a length (L).

Provided that said length (L) corresponds at least to some tires rotations (preferably at least 5 tire rotations, even more preferably 10 tire rotations), said length (L) can be selected to any predetermined value of interest.

For example said length (L) can be 20 meters which corresponds at least to about 10 rotations of said at least two tires (assuming an average circumferential length of a tire of about 2 meters) and which is generally the "granularity" preferred to properly describe an unevenness parameter of a road segment.

The measuring of the radial acceleration can be iterated over many road segments having the same length (L) or even different lengths.

In Fig. 10 for example it is shown an example of a run lasting for 260 meters, i.e. for 13 road segments of identical length of 20 meters.

Alternatively the measurement of the radial acceleration can be stopped during one or more road segments and started again or the length (L) can be varied during the measurement of the radial acceleration.

Said length (L) can be set before the starting of the measurement in a predetermined mode operation or, alternatively, can be also selected in post processing fashion, after having acquired the measured radial acceleration for a sufficiently long amount of time or distance.

Generally speaking, the longer said length (L), the higher the resolution in terms of spatial frequencies accessible and, ultimately, the more accurate estimation of a vehicle body motion.

It is recalled here that a spatial frequency is the inverse of a spatial distance between periodically repeated portions of the road profile and has the dimension of an inverse of a length, generally it is expressed as 1/meters as in this description and related figures.

For example, if said length (L) is selected to be about 20 meters, the shortest accessible spatial frequency is 1/ (20 meters).

Summarizing, the longer the length of said length (L) the shorter the spatial frequency accessible and the higher the resolution of the measurement for the estimation of a vehicle body motion starting from said at least two tires deformations.

The shortest accessible spatial frequencies can be increased, if necessary, by increasing the length (L) of the road segment under investigation, which, it is here recalled, can be selected also in post processing fashion.

On the other hand, the longest accessible spatial frequency is set by the circumferential length of a tire which has an average value of about 2 meters, hence the the longest accessible spatial frequency is 1/ (2 meters).

Generally speaking the longest accessible spatial frequency is proportional to the inverse of a tire circumferential length.

The longest accessible spatial frequencies can be varied by increasing the number of monitoring units associated to each of said at least two tires, for example using two monitoring units in different position of a tire, in particular placed along a diameter of a tire, in this way the effective circumferential length of a tire can be considered as half, so that the the longest accessible spatial frequency increases accordingly.

In some other embodiments, the length (L) of the road segment can be selected upon requirement given by regulators.

During the measurement of the quantity representative of a tire deformation, such as the radial accelerations the measured radial acceleration data can be directly sent by the monitoring units (2) to the controlling unit (11) or can be partly processed by the monitoring units (2).

Alternatively the measured radial acceleration data can be directly sent by the monitoring units (2) to the controlling unit (11) when the measurement of the radial acceleration is over, in a post processing fashion.

In another embodiment part of the processing of the radial acceleration data is carried out within said monitoring units (2) while the rest of the processing is carried out by the controlling unit (11) or, in a further embodiment, the radial acceleration data (or a preprocessed version of said radial acceleration data) are sent to a processing unit (not shown) external to said vehicle, for example a cloud server.

As previously discussed the radial acceleration measuring by the monitoring units (2) of said at least two tires (1), is carried out at least during respective passages of said respective monitoring units (2) in correspondence of said respective contact areas over multiple tire rotations along said road segment.

It is worthy to recall here that to the purpose of the present invention, it is not necessary to estimate the deformation of a tire every rotation of said tire (1), but, depending on the vehicle speed, a deformation estimation every other tire rotation, or at some other slower rate, could be enough: the higher vehicle speed, the higher the tire rotation, and the lower the need of estimating the tire deformation every tire rotation in order to properly sample the relatively slowly varying (≈ 1 Hz) vehicle body motions, as previously extensively discussed.

In any case for each of said passages wherein the radial acceleration is measured for said at least two tires, the measured radial acceleration in each passage (or in each complete rotation) is processed to obtain, for each of said at least two tires, a respective deformation value associable to each of said passages.

In other words, as a result of the processing of the radial acceleration data of each of said passages, a respective plurality of values of a respective tire deformation for each of said two tires (1) are obtained.

A tire deformation of each passage, or rotation, is obtained in one embodiment by performing a double integration of the radial acceleration measured in each of said passages, or rotations, of said tires (1), and by tracking the maximum value of the obtained double integrated function; alternatively a tire deformation value can be obtained, for example, based on an estimation of the size/dimension/length of the contact area during each of said passages.

As previously discussed, said respective plurality of values of a respective tire deformation for each of said two tires can be further assembled, in one embodiment, within each monitoring unit (2) so as to obtain, for each of said at least two tires, a respective curve representative of the deformation of a tire over multiple rotations of said tire along said road segment; or, alternatively, said respective plurality of values can be sent to the controlling unit (11) external to said tire to be therein assembled or to be further sent to a processing unit (not shown) external to said vehicle (100), for example a cloud server.

At the expiring of a maximum amount of time allocated for the radial acceleration measurement, or when a distance equal to about said length (L), or greater, has been run by the vehicle, the external controlling unit (11) communicates each monitoring unit (2) to stop the acceleration measurements and to communicate their outcome, for example the results of said measuring and/or said pluralities of values of said at least two tires deformations and/or said respective deformation curves. Alternatively each monitoring unit (2) can independently stop the acceleration measurements.

As previously underlined, the choice of whether distributing the processing to eventually obtain said respective deformation curves, between the monitoring units (2) and the external controlling unit (11) is a tradeoff between several constraints to be balanced, such as: hardware complexity, battery consumption, cost, processing power available to the CPU of the monitoring units, etc.

In any case at the end of the radial acceleration measurements and their processing, a respective deformations curve for each of said at least two tires will be available for the comparison of their relative trends in order to identify a relative motion of vehicle body portions with respect to each other.

For example in Fig.10 four deformation curves for each of the four tires of a vehicle are shown, respectively identified as Front Left (FL), Front Right (FR), Rear Left (RL), and Rear Right (RR), in this example the radial acceleration has been measured for about 260 meters, i.e. for 13 road segments of identical length (L) of 20 meters, at a vehicle speed of about 80 km/h; the radial acceleration measurements have been further processed to obtain a value of each tire deformation for each tire rotation which are indicated by circles in Fig. 10.

It is recalled here that each tire deformation curve is also descriptive of the motions of the vehicle body portion associated to a respective tire as previously discussed.

Hence based on the comparison of relative trends of said curves the relative motion of vehicle body portions with respect to each other is estimated.

In this embodiment the comparison of relative trends is carried out in the spatial frequency domain, by using a Fourier analysis.

First of all a respective Fourier transform of the four deformation curves is performed, the relative outcome is shown in Fig. 11 wherein the absolute values and the phase of each Fourier transform are respectively shown and they are respectively identified as Front Left (FL), Front Right (FR), Rear Left (RL), and Rear Right (RR) referring to a respective tire.

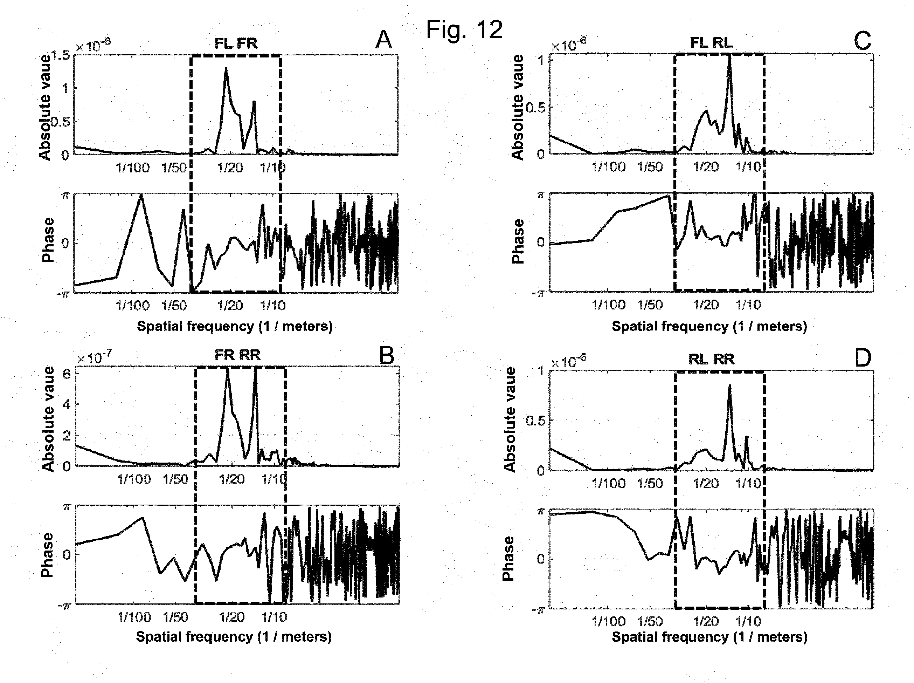

Depending on which vehicle body motion is under analysis a respective Fourier product curve is obtained by multiplying a first Fourier transform relative to a first tire for the complex conjugate of a second one relative to a second tire as it is shown in Fig. 12.

In Fig. 12 four respective Fourier product curves are sketched, both their absolute value and their phase, namely:
- Fig. 12 A shows the absolute value and the phase of Fourier product curve relative to the Front Left (FL), Front Right (FR) tires.
- Fig. 12 B shows the absolute value and the phase of Fourier product curve relative to the Front Right (FR), Rear Right (RR) tires.
- Fig. 12 C shows the absolute value and the phase of Fourier product curve relative to the Front Left (FL), Rear Left (RL) tires.
- Fig. 12 D shows the absolute value and the phase of Fourier product curve relative to the Rear Left (RL), Rear Right (RR) tires.

By analysing the Fourier product curves, the relative motion, with respect to each other, of vehicle body portions associated with the respective tires can be identified, for each spatial frequency, based on phase information related to each spatial frequency.

For example from Fig. 12 C the relative motion of the front left side of the vehicle with respect to the rear left side can be identified for each spatial frequency: similar considerations hold for the other cases of Fig. 12.

In the case of Fig. 12 C, said at least two tires belong to different axles of the vehicle so that vehicle pitching and/or heaving of the left part of the vehicle can be identified; as a matter of fact, spatial frequencies having a phase value close to π or to - π will contribute to pitching of the left side of the vehicle since this phase information, at those frequencies, is descriptive of antiphase behaviour and consequently of the left side of the vehicle portions moving in opposite directions (i.e. one downward and the other one upward).

On the other hand, spatial frequencies having a phase value close to zero will contribute to vehicle heaving since this phase information at those frequencies is descriptive of an in phase behaviour and, consequently, of the left side of the vehicle portions moving in the same directions (i.e. both downward and/or both upward).

Spatial frequencies having phase values not close to zero or not close to π or to - π, will contribute in this case to both pitching and heaving of the left side of the vehicle.

In the example of Fig. 12 A, both tires belong to the front axle of the vehicle so that vehicle rolling of the front part of the vehicle can be identified.; as a matter of fact, spatial frequencies having a phase value close to π or to - π will contribute to rolling of the front part of the vehicle since this phase information, at those frequencies, is descriptive of antiphase behaviour and consequently of the front portions of the vehicle moving in opposite directions (i.e. one downward and the other one upward).

On the other hand, spatial frequencies having a phase value close to zero will contribute to the vehicle front part heaving since this phase information at those frequencies is descriptive of a in phase behaviour and, consequently, of the front portions of the vehicle moving in the same directions (i.e. both downward and/or both upward).

Spatial frequencies having phase values not close to zero or not close to π or to - π, will contribute in this case to both rolling and heaving of the front part of the vehicle.

Analogous considerations apply to the examples of Fig. 12 B and Fig. 12 D.

Summarising by the analysis of the phases of the Fourier product curve of Fig. 12, it is possible , for each spatial frequency, to identify a relative motion of vehicle body portions with respect to each other induced by a road perturbation having said spatial frequency.

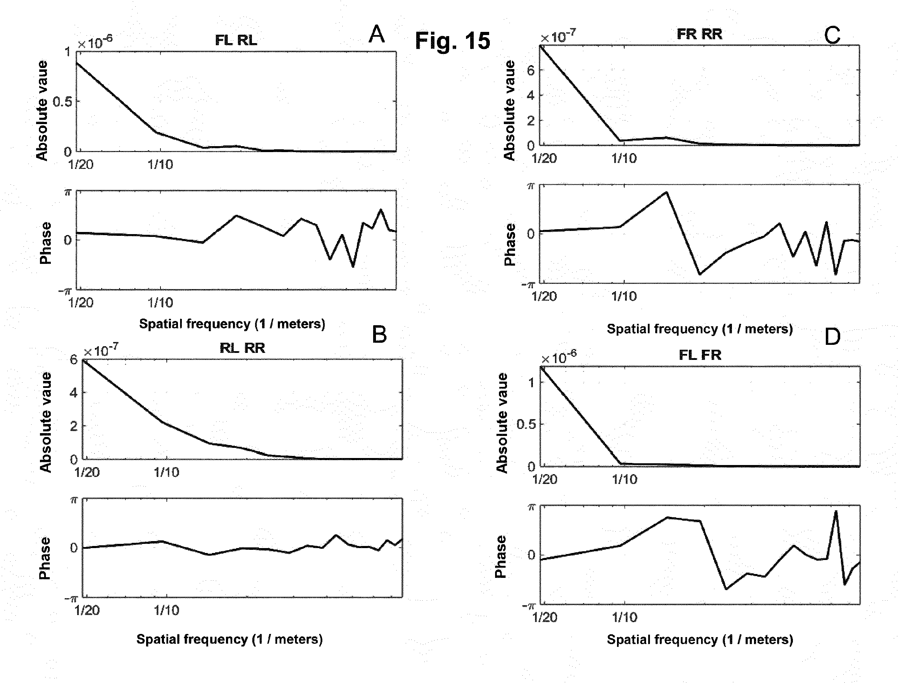

On the other hand, a quantitative analysis can be also carried out by using the absolute values (or modulus) of the Fourier product curves shown in Fig. 12, it is in fact clear that only the spatial frequencies having an absolute value different from zero (i.e. not close to zero) will actually contribute to a relative motion of vehicle body portions with respect to each other. Those frequencies are comprised within the dashed rectangles in Fig. 15 A,B,C,D).

It is hence possible to estimate an unevenness parameter of a road segment based on the absolute values of each of the Fourier product curves of Fig. 12, for example by integrating the absolute value of the product curve over a certain range of spatial frequencies, for instance over the spectrum of spatial frequencies different from zero previously identified and comprised within the dashed rectangles in Fig. 12 A,B,C,D).

In one embodiment, for example with reference again Fig. 12 C, wherein pitching and/or heaving of the left side of a vehicle are identified based on the phase information of Fig. 12 C, by integrating the absolute value of the relative Fourier product curve, an unevenness parameter (i.e. a numerical value) can be obtained which is descriptive of the global motion of said left side of a vehicle due to both pitching and/or heaving or a combination thereof along said road segment, in this case having a length of 260 meters.

As previously discussed, the information about the estimations about a relative motion of vehicle body portions with respect to each other, can be provided to a vehicle control system (12) and/or transmitted to a processing unit external to said vehicle, for a further processing or storage, for example a cloud server.

### EXAMPLE

In all the following described experiment, tires manufactured and commercialized by the Applicant (Pirelli 205/65 R 16C - 107 T Carrier) have been equipped with a monitoring unit, secured to the inner surface of the tread and adapted to measure the radial acceleration. The monitoring unit could be driven to frequency high enough (i.e. higher or equal to 500 kHz) to properly resolve the dynamic of the radial acceleration in a single tire rotation for a vehicle speed exceeding 50 km/h so as to generate a radial acceleration signal over many tire rotations, or at least during passages of said monitoring units over a respective contact area of each tire.

Said tires have been fitted to the wheels of a light truck which has been driven along an Italian road dividing the route into many road segments having a length (L) of about 20 meters with the goal of estimating a relative motion of vehicle body portions with respect to each other in each of said 20 meters long road segments.

It will be shown the outcome of said relative motion estimations for a single 20 meters long road segment as an example, while the same procedure can be followed for any road segment.

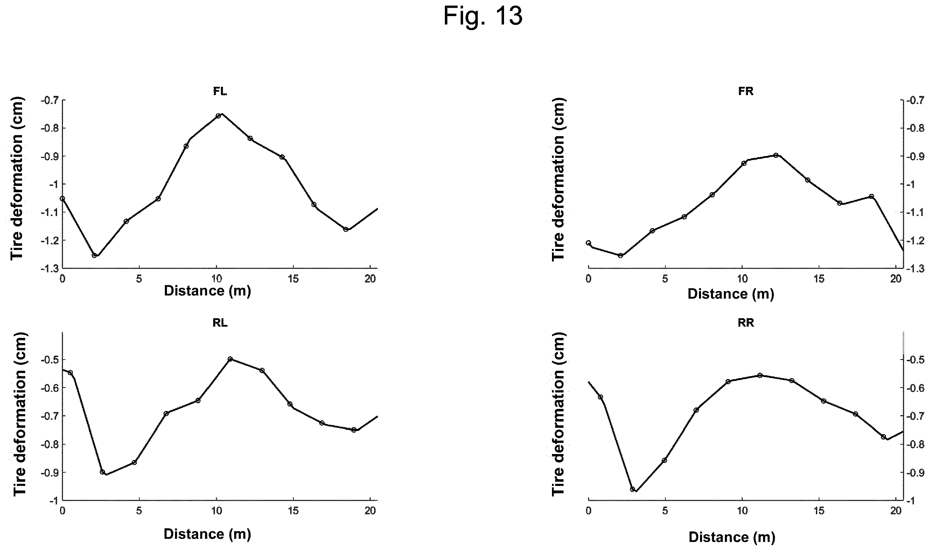

In Fig. 13 are reported the deformation values of the four tires of said light truck along a 20 meters long road segment, namely Front Left (FL), Front Right (FR), Rear Left (RL), and Rear Right (RR).

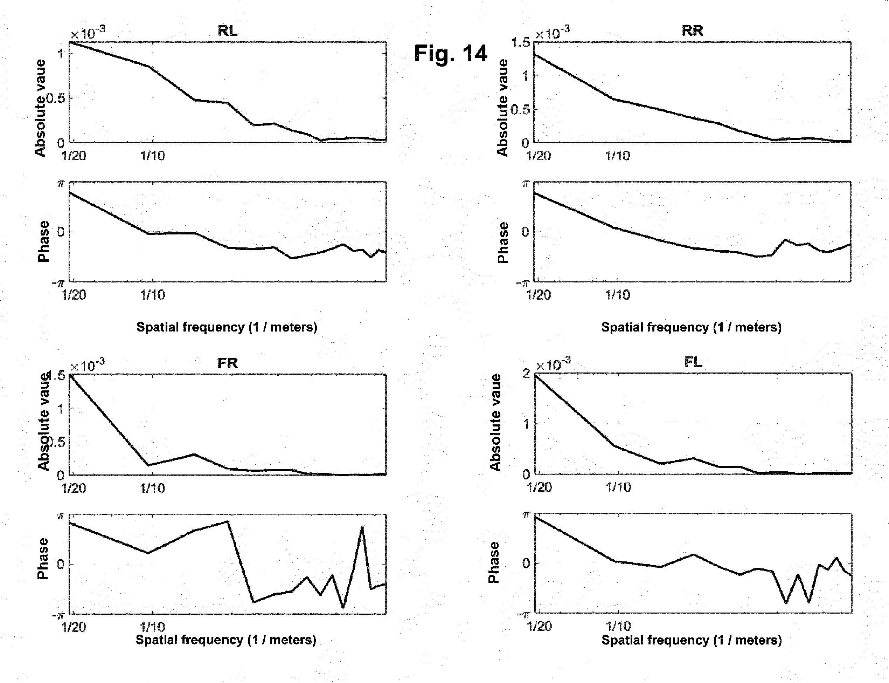

Starting from said deformation curves of Fig. 13, a respective Fourier transform of the four deformation curves is performed; the relative outcome is shown in Fig. 14 wherein the absolute values and the phase of each Fourier transform are respectively shown and they are respectively identified as Front Left (FL), Front Right (FR), Rear Left (RL), and Rear Right (RR) referring to a respective tire.

Depending on which vehicle body motion is under analysis a respective Fourier product curve is obtained by multiplying a first Fourier transform relative to a first tire for the complex conjugate of a second one relative to a second tire as it is shown in Fig. 15.

In Fig. 15 four respective Fourier product curves are sketched, both their absolute value and their phase, namely:
- Fig. 15 A shows the absolute value and the phase of Fourier product curve relative to the Front Left (FL) and Rear Left (RL) tires.
- Fig. 15 B shows the absolute value and the phase of Fourier product curve relative to the Rear Left (RL) tire and Rear Right (RR) tires.
- Fig. 15 C shows the absolute value and the phase of Fourier product curve relative to the Front Right (FR) and Rear Right (RR) tires.
- Fig. 15 D shows the absolute value and the phase of Fourier product curve relative to the Front Left (FL) and Front Right (FR) tires.

By analysing the phases of each Fourier product curves the relative motion, with respect to each other, of vehicle body portions associated with the respective tires can be identified by using the same method described with reference to Fig. 10 to 13.

For example by analysing the phase curve of Fig. 15 B referring to of Fourier product curve of the Front Right (FR) and Rear Right (RR) tires, it can be easily identified that the rear part of the light truck underwent almost no rolling motion since the phase value of all the spatial frequencies of Fig. 15 B are close to zero, while in the case of rolling of the rear portion of the light truck, their phase valued should be close to π or - π as previously discussed.

Analogous considerations hold for the other vehicle body motions.

## Claims

1. Method for estimating a relative motion of vehicle body portions with respect to each other along a road segment having a length (L), wherein said length (L) corresponds at least to a plurality of tire rotations, the method comprising:
a) associating a respective monitoring unit (2) to at least two tires (1) of a vehicle (100), said monitoring units comprising at least one respective sensing element (3) adapted to measure at least one quantity descriptive of a respective deformation of said tires (1);
b) fitting said at least two tires (1) to a respective wheel of said vehicle (100) and operating said vehicle (100) so as to cause rotation of said at least two tires (1) on a rolling surface along said road segment wherein, due to said fitting and operating, said at least two tires (1) are deformed so as to form a respective contact area between each of said at least two tires (1) and said rolling surface;
c) for each of said at least two tires (1), measuring said quantity at least during respective passages of said respective monitoring units (2) in correspondence of said respective contact areas,
d) for each of said respective passages, processing the measured quantity so as to obtain a value of a respective tire deformation undergone by each of said at least two tires (1) in each of said respective passages, and to obtain, for each of said at least two tires (1), a respective plurality of values of said respective tire deformation over multiple tire rotations, said method **characterized in that** it comprises the further steps of:
e) assembling said respective pluralities of values of said respective tire deformations so as to obtain, for each of said at least two tires (1), a respective curve representative of a deformation of said tires (1) over multiple rotations along said road segment,
f) comparing relative trends of said at least two curves so as to identify said relative motion of said respective vehicle body portions with respect to each other along said road segment.

2. Method according to claim 1 wherein said at least two tires (1) are fitted to different axles of said vehicle (100).

3. Method according to claim 1 wherein said at least two tires (1) are fitted to the same axle of said vehicle (100).

4. Method according to any of the previous claims wherein comparing relative trends of said at least two curves further comprises:
• calculating a respective Fourier transform of said at least two curves, so as to obtain at least a first and a second Fourier transforms,
• identifying said relative motion based on a processing of said first and second Fourier transforms.

5. Method according to claim 4 further comprising the steps of:
• multiplying said first Fourier transform to the complex conjugate of said second Fourier transform so as to obtain a Fourier product curve,
• extracting a phase information related to at least one spatial wavelength from said Fourier product curve,
• identifying said relative motion based on a processing of said phase information related to said at least one spatial wavelength.

6. Method according to any of the previous claims wherein said measuring of said quantity is carried out at a measuring frequency higher than or equal to 0.5 KHz, more preferably higher than or equal to 1 KHz, even more preferably higher than or equal to 5 KHz.

7. Method according to any of the previous claims, further comprising starting the measurement of said quantity when at least one of the following access conditions is met:
- a speed of said vehicle (100) is comprised within a predetermined speed range, preferably within about 40 km/h and about 100 km/h, more preferably within about 60 km/h and about 80 km/h;
- an absolute value of longitudinal acceleration of said vehicle (100) is lower than a predetermined amount, preferably below about 1 m/s².

8. Method according to any of the previous claims, wherein said monitoring unit (2) is secured to a crown portion of the respective tire (1), and comprises at least one sensing element (3) adapted to measure at least a radial and/or tangential acceleration of said crown portion during rotation of said tire (1).

9. System for estimating a relative motion of vehicle body portions with respect to each other, the system comprising at least two monitoring units (2) adapted to be respectively associated with at least two tires (1) of a vehicle (100), said monitoring units (2) respectively comprising at least one sensing element (3) adapted to measure at least one quantity descriptive of a deformation of the respective associated tire, wherein, when said at least two tires (1) are fitted to respective wheels of said vehicle (100) and said vehicle (100) is operated so as to cause rotation of said tires (1) on a rolling surface, due to said fitting and operating said tires (1) are deformed so as to form a respective contact area between said at least two tires (1) and said rolling surface; wherein the system further comprises at least one processing unit (6) comprising software modules being adapted to estimate a relative motion of vehicle body portions with respect to each other along a road segment, wherein said software modules are adapted to:
- for each of said at least two tires (1), measure said quantity at least during respective passages of said respective monitoring units (2) in correspondence of said respective contact areas,
- for each of said respective passages, process the measured quantity so as to obtain a value of a respective tire deformation undergone by each of said at least two tires in each of said respective passages, and to obtain, for each of said at least two tires (1), a respective plurality of values of said respective tire deformation over multiple tire rotations,
- said system **characterized in that** said software modules are further adapted to:
- assemble said respective pluralities of values of said respective tire deformations so as to obtain, for each of said at least two tires (1), a respective curve representative of a deformation of said tires over multiple rotations along said road segment,
- compare relative trends of said at least two curves so as to identify said relative motion of said respective vehicle body portions with respect to each other along said road segment.

10. A vehicle (100) having at least two tires (1) fitted thereon, comprising a system for estimating a relative motion of vehicle body portions with respect to each other according to claim 9.

## Patentansprüche

1. Verfahren zur Schätzung einer relativen Bewegung von Fahrzeugkarosserieteilen in Bezug aufeinander entlang eines Straßenabschnitts mit einer Länge (L), wobei die Länge (L) mindestens einer von einer Vielzahl von Reifenumdrehungen entspricht, wobei das Verfahren umfasst:
a) Zuordnen einer jeweiligen Überwachungseinheit (2) zu mindestens zwei Reifen (1) eines Fahrzeugs (100), wobei die Überwachungseinheiten mindestens ein jeweiliges Sensorelement (3) umfassen, das dafür ausgelegt ist, mindestens eine Größe zu messen, die eine jeweilige Verformung der Reifen (1) beschreibt;
b) Anbringen der mindestens zwei Reifen (1) an einem jeweiligen Rad des Fahrzeugs (100) und Betreiben des Fahrzeugs (100), um eine Umdrehung der mindestens zwei Reifen (1) auf einer Rollfläche entlang des Straßenabschnitts zu bewirken, wobei aufgrund des Anbringens und Betreibens die mindestens zwei Reifen (1) so verformt werden, dass sie eine jeweilige Kontaktfläche zwischen jedem der mindestens zwei Reifen (1) und der Rollfläche bilden;
c) für jeden der mindestens zwei Reifen (1) Messen der Größe der jeweiligen Verformung mindestens während der jeweiligen Durchgänge der jeweiligen Überwachungseinheiten (2) gemäß den jeweiligen Kontaktbereichen,
d) für jeden der jeweiligen Durchgänge Verarbeiten der gemessenen Größe, um einen Wert einer jeweiligen Reifenverformung zu erhalten, die von jedem der mindestens zwei Reifen (1) in jedem der jeweiligen Durchgänge erfahren wird, und für jeden der mindestens zwei Reifen (1) eine jeweilige Vielzahl von Werten der jeweiligen Reifenverformung über mehrere Reifenumdrehungen zu erhalten, wobei das Verfahren **dadurch gekennzeichnet ist, dass** es die folgenden weiteren Schritte umfasst:
e) Zusammensetzen der jeweiligen Vielzahl von Werten der jeweiligen Reifenverformungen, um für jeden der mindestens zwei Reifen (1) eine jeweilige Kurve zu erhalten, die für eine Verformung der Reifen (1) über mehrere Umdrehungen entlang des Straßenabschnitts repräsentativ ist,
f) Vergleichen relativer Tendenzen der mindestens zwei Kurven, um die relative Bewegung der jeweiligen Fahrzeugkarosserieteile in Bezug aufeinander entlang des Straßenabschnitts zu identifizieren.

2. Verfahren nach Anspruch 1, wobei die mindestens zwei Reifen (1) an verschiedenen Achsen des Fahrzeugs (100) angebracht sind.

3. Verfahren nach Anspruch 1, wobei die mindestens zwei Reifen (1) an der gleichen Achse des Fahrzeugs (100) angebracht sind.

4. Verfahren nach einem der vorhergehenden Ansprüche, wobei das Vergleichen jeweiliger Tendenzen der mindestens zwei Kurven ferner umfasst:
• Berechnen einer jeweiligen Fourier-Transformation der mindestens zwei Kurven, um zumindest eine erste und eine zweite Fourier-Transformation zu erhalten,
• Identifizieren der relativen Bewegung basierend auf einer Verarbeitung der ersten und der zweiten Fourier-Transformation.

5. Verfahren nach Anspruch 4, ferner umfassend die folgenden Schritte:
• Multiplizieren der ersten Fourier-Transformation mit dem komplexen Konjugat der zweiten Fourier-Transformation, um eine Fourier-Produkt-Kurve zu erhalten,
• Extrahieren einer Phaseninformationen in Bezug auf mindestens eine räumliche Wellenlänge aus der Fourier-Produkt-Kurve,
• Identifizieren der relativen Bewegung basierend auf einer Verarbeitung der Phaseninformation in Bezug auf die mindestens eine räumliche Wellenlänge.

6. Verfahren nach einem der vorhergehenden Ansprüche, wobei das Messen der Verformungsgröße mit einer Messfrequenz von größer oder gleich 0,5 KHz, vorzugsweise größer oder gleich 1 KHz, noch bevorzugter größer oder gleich 5 KHz durchgeführt wird.

7. Verfahren nach einem der vorhergehenden Ansprüche, ferner umfassend Starten der Messung der Größe, wenn mindestens eine der folgenden Zugangsbedingungen erfüllt ist:
- eine Geschwindigkeit des Fahrzeugs (100) liegt innerhalb eines vorbestimmten Geschwindigkeitsbereichs, vorzugsweise zwischen etwa 40 km/h und etwa 100 km/h, besonders bevorzugt zwischen etwa 60 km/h und etwa 80 km/h;
- ein absoluter Wert der Längsbeschleunigung des Fahrzeugs (100) ist niedriger als ein vorbestimmter Wert, vorzugsweise unter etwa 1 m/s².

8. Verfahren nach einem der vorhergehenden Ansprüche, wobei die Überwachungseinheit (2) an einem Scheitelteil des Reifens (1) befestigt ist und mindestens ein Sensorelement (3) umfasst, das dafür ausgelegt ist, mindestens eine radiale und/oder tangentiale Beschleunigung des Scheitelteils während der Umdrehung des Reifens (1) zu messen.

9. System zum Schätzen einer relativen Bewegung von Fahrzeugkarosserieteilen in Bezug aufeinander, wobei das System mindestens zwei Überwachungseinheiten (2) umfasst, die dafür ausgelegt sind, jeweils mindestens zwei Reifen (1) eines Fahrzeugs (100) zugeordnet zu werden, wobei die Überwachungseinheiten (2) jeweils mindestens ein Sensorelement (3) umfassen, das dafür ausgelegt ist, mindestens eine Größe zu messen, die eine Verformung des jeweils zugeordneten Reifens (1) beschreibt, wobei, wenn die mindestens zwei Reifen (1) an jeweiligen Rädern eines Fahrzeugs (100) angebracht sind und das Fahrzeug (100) so betrieben wird, dass eine Umdrehung der Reifen auf einer jeweiligen Rollfläche bewirkt wird, die Reifen (1) aufgrund der Anbringens und Betreibens so verformt werden, dass sie jeweilige Kontaktflächen zwischen den mindestens zwei Reifen (1) und der Rollfläche bilden; wobei das System ferner mindestens eine Verarbeitungseinheit (6) umfasst, die Softwaremodule umfasst, die dafür ausgelegt sind, eine relative Bewegung von Fahrzeugkarosserieteilen in Bezug aufeinander entlang eines Straßenabschnitts zu schätzen, wobei die Softwaremodule für Folgendes ausgelegt sind:
- für jeden der mindestens zwei Reifen (1) Messen der Größe der jeweiligen Verformung mindestens während der jeweiligen Durchgänge der jeweiligen Überwachungseinheiten (2) gemäß den jeweiligen Kontaktbereichen,
- für jeden der jeweiligen Durchgänge Verarbeiten der gemessenen Größe, um einen Wert einer jeweiligen Reifenverformung zu erhalten, die von jedem der mindestens zwei Reifen in jedem der jeweiligen Durchgänge erfahren wird, und für jeden der mindestens zwei Reifen eine jeweilige Vielzahl von Werten der jeweiligen Reifenverformung über mehrere Reifenumdrehungen zu erhalten,
- wobei das System **dadurch gekennzeichnet ist, dass** sie Softwaremodule ferner ausgelegt sind zum:
- Zusammensetzen der jeweiligen Vielzahl von Werten der jeweiligen Reifenverformungen, um für jeden der mindestens zwei Reifen (1) eine jeweilige Kurve zu erhalten, die für eine Verformung des Reifens über mehrere Umdrehungen entlang des Straßenabschnitts repräsentativ ist,
- Vergleichen relativer Tendenzen der mindestens zwei Kurven, um die relative Bewegung der jeweiligen Fahrzeugkarosserieteile in Bezug aufeinander entlang des Straßenabschnitts zu identifizieren.

10. Fahrzeug (100) mit mindestens zwei daran angebrachten Reifen (1), umfassend ein System zum Schätzen einer relativen Bewegung von Fahrzeugkarosserieteilen in Bezug aufeinander nach Anspruch 9.

## Revendications

1. Procédé d'estimation d'un mouvement relatif de parties de carrosserie de véhicule les unes par rapport aux autres le long d'un segment de route ayant une longueur (L), dans lequel ladite longueur (L) correspond à au moins une pluralité de rotations de pneu, le procédé comprenant :
a) l'association d'une unité de surveillance respective (2) à au moins deux pneus (1) d'un véhicule (100), lesdites unités de surveillance comprenant au moins un élément de détection respectif (3) adapté pour mesurer au moins une grandeur descriptive d'une déformation respective desdits pneus (1) ;
b) le montage desdits au moins deux pneus (1) sur une roue respective dudit véhicule (100) et la mise en fonctionnement dudit véhicule (100) afin d'entraîner la rotation desdits au moins deux pneus (1) sur une surface de roulement le long dudit segment de route, dans lequel, en raison dudit montage et de ladite mise en fonctionnement, lesdits au moins deux pneus (1) sont déformés afin de former une zone de contact respective entre chacun desdits au moins deux pneus (1) et ladite surface de roulement ;
c) pour chacun desdits au moins deux pneus (1), la mesure de ladite grandeur au moins durant des passages respectifs desdites unités de surveillance respectives (2) en correspondance avec lesdites zones de contact respectives,
d) pour chacun desdits passages respectifs, le traitement de la grandeur mesurée afin d'obtenir une valeur d'une déformation de pneu respective subie par chacun desdits au moins deux pneus (1) dans chacun desdits passages respectifs, et d'obtenir, pour chacun desdits au moins deux pneus (1), une pluralité respective de valeurs de ladite déformation de pneu respective au cours de multiples rotations de pneu, ledit procédé étant **caractérisé en ce qu'**il comprend les étapes supplémentaires de :
e) assemblage desdites pluralités respectives de valeurs desdites déformations de pneus respectives afin d'obtenir, pour chacun desdits au moins deux pneus (1), une courbe respective représentative d'une déformation desdits pneus (1) au cours de multiples rotations le long dudit segment de route,
f) comparaison des tendances relatives desdites au moins deux courbes afin d'identifier ledit mouvement relatif desdites parties de carrosserie de véhicule respectives les unes par rapport aux autres le long dudit segment de route.

2. Procédé selon la revendication 1 dans lequel lesdits au moins deux pneus (1) sont montés sur des essieux différents dudit véhicule (100).

3. Procédé selon la revendication 1 dans lequel lesdits au moins deux pneus (1) sont montés sur le même essieu dudit véhicule (100).

4. Procédé selon l'une des revendications précédentes dans lequel la comparaison des tendances relatives desdites au moins deux courbes comprend en outre :
• le calcul d'une transformée de Fourier respective desdites au moins deux courbes, afin d'obtenir au moins des première et deuxième transformées de Fourier,
• l'identification dudit mouvement relatif sur la base d'un traitement desdites première et deuxième transformées de Fourier.

5. Procédé selon la revendication 4 comprenant les étapes de :
• multiplication de ladite première transformée de Fourier au conjugué complexe de ladite deuxième transformée de Fourier afin d'obtenir une courbe de produit de Fourier,
• l'extraction d'informations de phase liées à au moins une longueur d'onde spatiale à partir de ladite courbe de produit de Fourier,
• l'identification dudit mouvement relatif sur la base d'un traitement desdites informations de phase liées à ladite au moins une longueur d'onde spatiale.

6. Procédé selon l'une des revendications précédentes dans lequel ladite mesure de ladite grandeur est effectuée à une fréquence de mesure supérieure ou égale à 0,5 KHz, plus préférablement supérieure ou égale à 1 KHz, de façon encore plus préférée supérieure ou égale à 5 KHz.

7. Procédé selon l'une des revendications précédentes, comprenant en outre le lancement de la mesure de ladite grandeur lorsqu'au moins l'une des conditions d'accès suivantes est remplie :
- une vitesse dudit véhicule (100) est comprise dans une plage de vitesse prédéterminée, de préférence entre environ 40 km/h et environ 100 km/h, plus préférablement entre environ 60 km/h et environ 80 km/h ;
- une valeur absolue d'accélération longitudinale dudit véhicule (100) est inférieure à une quantité prédéterminée, de préférence inférieure à environ 1 m/s².

8. Procédé selon l'une des revendications précédentes, dans lequel ladite unité de surveillance (2) est fixée à une partie sommet du pneu respectif (1), et comprend au moins un élément de détection (3) adapté pour mesurer au moins une accélération radiale et/ou tangentielle de ladite partie sommet durant la rotation dudit pneu (1).

9. Système d'estimation d'un mouvement relatif de parties de carrosserie de véhicule les unes par rapport aux autres, le système comprenant au moins deux unités de surveillance (2) adaptées pour être associées respectivement à au moins deux pneus (1) d'un véhicule (100), lesdites unités de surveillance (2) comprenant respectivement au moins un élément de détection (3) adapté pour mesurer au moins une grandeur descriptive d'une déformation du pneu associé respectif, dans lequel, lorsque lesdits au moins deux pneus (1) sont montés sur des roues respectives dudit véhicule (100) et que ledit véhicule (100) fonctionne afin d'entraîner la rotation desdits pneus (1) sur une surface de roulement, en raison dudit montage et de ladite mise en fonctionnement lesdits pneus (1) sont déformés afin de former une zone de contact respective entre lesdits au moins deux pneus (1) et ladite surface de roulement ; dans lequel le système comprend en outre au moins une unité de traitement (6) comprenant des modules logiciels qui sont adaptés pour estimer au un mouvement relatif de parties de carrosserie de véhicule les unes par rapport aux autres le long d'un segment de route, dans lequel lesdits modules logiciels sont adaptés pour :
- pour chacun desdits au moins deux pneus (1), mesurer ladite grandeur au moins durant des passages respectifs desdites unités de surveillance respectives (2) en correspondance avec lesdites zones de contact respectives,
- pour chacun desdits passages respectifs, traiter la grandeur mesurée afin d'obtenir une valeur d'une déformation de pneu respective subie par chacun desdits au moins deux pneus dans chacun desdits passages respectifs, et d'obtenir, pour chacun desdits au moins deux pneus (1), une pluralité respective de valeurs de ladite déformation de pneu respective au cours de multiples rotations de pneu,
- ledit système étant **caractérisé en ce que** lesdits modules logiciels sont en outre adaptés pour :
- assembler lesdites pluralités respectives de valeurs desdites déformations de pneus respectives afin d'obtenir, pour chacun desdits au moins deux pneus (1), une courbe respective représentative d'une déformation desdits pneus au cours de multiples rotations le long dudit segment de route,
- comparer les tendances relatives desdites au moins deux courbes afin d'identifier ledit mouvement relatif desdites parties de carrosserie de véhicule respectives les unes par rapport aux autres le long dudit segment de route.

10. Véhicule (100) sur lequel sont montés au moins deux pneus (1), comprenant un système d'estimation d'un mouvement relatif de parties de carrosserie de véhicule les unes par rapport aux autres selon la revendication 9.
